# EUROPÄISCHE PATENTSCHRIFT

(11) **EP 4 158 611 B1**
(45) Veröffentlichungstag und Bekanntmachung des Hinweises auf die Patenterteilung: **12.11.2025**
(21) Anmeldenummer: 21727133.7
(22) Anmeldetag: 19.05.2021
(51) Int. Cl.: G08G 1/0962, B62D 15/02, G06V 20/56, G06V 20/58, G08G 1/0965

(54) **ASSISTENT FÜR RETTUNGSGASSE**
EMERGENCY LANE ASSISTANT
ASSISTANT DE VOIE D'URGENCE

(30) Priorität: 27.05.2020 DE 102020114213
(43) Veröffentlichungstag der Anmeldung: 05.04.2023
(73) Patentinhaber: Valeo Schalter und Sensoren GmbH, 74321 Bietigheim-Bissingen (DE)
(72) Erfinder: MAURER, Philipp, 74321 Bietigheim-Bissingen (DE)
(74) Vertreter: Jauregui Urbahn, Kristian
(86) Internationale Anmeldenummer: PCT/EP2021/063248
(87) Internationale Veröffentlichungsnummer: WO 2021/239531

(56) Entgegenhaltungen:
- DE-A1- 102017 008 962
- DE-A1- 102018 004 668

## Beschreibung

Die vorliegende Erfindung betrifft ein Verfahren zum Bilden einer Rettungsgasse für ein Fahrzeug, wobei das Fahrzeug wenigstens einen Umgebungssensor zum Erfassen einer Umgebung des Fahrzeugs aufweist.

Auch betrifft die vorliegende Erfindung ein Fahrunterstützungssystem für ein Fahrzeug zum Bilden einer Rettungsgasse, umfassend wenigstens einen Umgebungssensor zum Erfassen einer Umgebung des Fahrzeugs, und eine Steuerungseinrichtung, die über einen Datenbus mit dem wenigstens einen Umgebungssensor zum Erfassen der Umgebung des Fahrzeugs verbunden ist, wobei das Fahrunterstützungssystem ausgeführt ist, das obige Verfahren zum Bilden einer Rettungsgasse durchzuführen.

Beim Fahren auf Straßen mit mehreren Fahrspuren für die aktuelle Fahrtrichtung eines Fahrzeugs ist Staubildung ein häufiges Problem. Dies gilt insbesondere für das Fahren auf Autobahnen, die normalerweise wenigstens zwei Fahrspuren für jede Fahrtrichtung aufweisen, wobei teilweise bereits vier oder sogar fünf Fahrspuren für eine Fahrtrichtung vorhanden sind. Eine prinzipielle Beschränkung für die Anzahl der Fahrspuren für eine Fahrtrichtung gibt es nicht.

Um das Führen von Fahrzeugen in solchen Stausituationen für einen jeweiligen Fahrzeugführer einfach und sicher zu gestalten, sind verschiedene Fahrunterstützungssysteme bekannt, mit denen sich das Fahrzeug teilautonom oder sogar vollständig autonom im Stau bewegen kann. Solche Systeme sind beispielsweise als Stau-Assistent bekannt und werden bereits von verschiedenen Fahrzeuggerstellern erfolgreich eingesetzt. Auch darüber hinaus sind verschiedenartige Unterstützungssystem bekannt, beispielsweise adaptive Geschwindigkeitsregelungen unter Berücksichtigung eines Abstands zu vorausfahrenden Fahrzeugen.

Im Falle einer Staubildung ergibt sich ein häufiges Problem, das in der Bildung einer korrekten Rettungsgasse besteht. Dieses Problem betrifft alle Verkehrsteilnehmer gemeinsam, also ein Verhalten aller auf der Straße oder Autobahn befindlichen Fahrzeuge. Die Rettungsgasse ist im Fall eines Staus zu bilden, um bei einer Annäherung von Einsatzfahrzeugen aus einer Richtung hinter dem Fahrzeug eine Gasse bereitzustellen, durch die sich die Einsatzfahrzeuge durch den Stau hindurchbewegen können. Die Rettungsgasse wird zwischen den Fahrzeugen zweier Fahrspuren gebildet, wodurch sich ausreichend Platz für ein Einsatzfahrzeug bietet. Die Rettungsgasse wird dabei für eine Fahrtrichtung üblicherweise zwischen einer Fahrspur "ganz links" und einer unmittelbar daneben befindlichen Fahrspur gebildet, wobei dies eine Vorschrift ist, die abhängig von nationalen Vorschriften variieren kann. Nur durch die Bildung der Rettungsgasse wird es den Einsatzfahrzeugen und damit den darin befindlichen Einsatzkräften ermöglicht, Gefahrstellen und insbesondere Unfallstellen schnellstmöglich zu erreichen, um die Gefahr zu beseitigen, die Unfallstelle zu sichern, verletzte Personen zu bergen und zu versorgen, und ähnliches. Dadurch können die Fahrbahn wieder für den Verkehr freigegeben und ein Weiterfließen des Verkehrs erreicht werden.

In der Praxis ist es für die Einsatzkräfte in den Einsatzfahrzeugen häufig schwierig, die Unfall- und Gefahrstellen zeitnah zu erreichen, da die Rettungsgasse nicht, nicht rechtzeitig oder falsch gebildet wird. Dadurch kann es vorkommen, dass insbesondere die Rettung und Versorgung von verletzten Personen erst mit einer gefährlichen Verzögerung erfolgen kann. Daraus können sich schwerwiegende Konsequenzen für die verletzten Personen ergeben.

DE102017008962A1 und DE10201804668A1 offenbaren Verfahren zum Bestimmen und Ausgeben, dass eine Rettungsgasse gebildet werden sollte.

Ausgehend von dem oben genannten Stand der Technik liegt der Erfindung somit die Aufgabe zugrunde, ein Verfahren und ein Fahrunterstützungssystem anzugeben, die es Einsatzkräften ermöglichen, auf mehrspurigen Straßen bei einer Stausituation auf der jeweiligen Straße möglichst schnell eine Gefahrenstelle oder eine Unfallstelle zu erreichen.

Die Lösung der Aufgabe erfolgt erfindungsgemäß durch die Merkmale der unabhängigen Ansprüche. Vorteilhafte Ausgestaltungen der Erfindung sind in den Unteransprüchen angegeben.

Erfindungsgemäß ist somit ein Verfahren zum Bilden einer Rettungsgasse für ein Fahrzeug nach Anspruch 1 angegeben.

Erfindungsgemäß ist außerdem ein Fahrunterstützungssystem für ein Fahrzeug zum Bilden einer Rettungsgasse nach Anspruch 15 angegeben.

Grundidee der vorliegenden Erfindung ist es also, eine automatische Erkennung einer Verkehrssituation zur Bildung einer Rettungsgasse durchzuführen, wobei durch die Erfassung der Position des Fahrzeugs relativ zu umgebenden Fahrzeugen und/oder einer oder mehreren Begrenzungen von Fahrspuren und/oder der Fahrbahn eine erforderliche Positionsänderung des Fahrzeugs zur Bildung der Rettungsgasse auf einfache und zuverlässige Weise ermittelt werden kann. Dabei kann auf prinzipiell unterschiedliche Arten von Umgebungssensoren zurückgegriffen werden, die einzeln oder zu mehreren an dem Fahrzeug angebracht sind. Auch Kombinationen von unterschiedliche Arten von Umgebungssensoren, die jeweils einzeln oder zu mehreren an dem Fahrzeug angebracht sind, können gemeinsam verwendet werden. Der oder die Umgebungssensor(en) stellt oder stellen dabei Sensorinformation bereit, aus der aktuelle Positionen von umgebenden Fahrzeugen und/oder von Begrenzungen von Fahrspuren und/oder der Fahrbahn bestimmt werden können. Bei der Verwendung von mehreren gleichartigen und/oder verschiedenartigen Umgebungssensoren kann eine Fusion der Sensorinformation der Umgebungssensoren durchgeführt werden, um eine gemeinsame Erfassung der Umgebung des Fahrzeugs durchzuführen.

Die Begrenzungen von Fahrspuren und/oder der Fahrbahn können dabei als Markierungen auf der Fahrbahn bzw. an deren Rand ausgebildet sein. Alternativ oder zusätzlich kann die Begrenzung auch beispielsweise durch ein seitliches Ende der Fahrbahn definiert sein, beispielsweise einem Höhenunterschied, einem Übergang von Asphalt zu Grünstreifen, oder ähnlichem.

Das Erfassen einer Fahrsituation auf der Straße mit einer Fahrbahn mit mehreren Fahrspuren für eine Fahrtrichtung des Fahrzeugs betrifft eine Unterscheidung von Fahrsituationen mit einer oder mehreren Fahrspuren für die aktuelle Fahrtrichtung des Fahrzeugs. Bei nur einer Fahrspur für die aktuelle Fahrtrichtung des Fahrzeugs kann keine Rettungsgasse zwischen Fahrspuren gebildet werden. Das Erfassen einer Fahrsituation umfasst neben dem Befahren der Fahrspur, d.h. einer Bewegung des Fahrzeugs auf der Fahrspur, auch Stausituationen, in der sich das Fahrzeug nicht bewegt, sich aber auf einer Fahrbahn mit mehreren Fahrspuren für die aktuelle Fahrtrichtung befindet.

Das Ermitteln einer Stausituation auf der Straße betrifft ein Erkennen eines Staus, der die Bildung einer Rettungsgasse erforderlich machen kann. Die Stausituation kann durch einen anhaltenden Stillstand des Verkehrs oder auch ein Fahren mit niedrigen Fahrtgeschwindigkeit definiert sein, beispielsweise im Bereich einer Schrittgeschwindigkeit. Prinzipiell ist es möglich, die Rettungsgasse automatisch beim Erkennen der Stausituation zu bilden, oder erst unter Berücksichtigung weiterer Kriterien, beispielsweise abhängig von einer Staudauer, einer Fahrtgeschwindigkeit in der Stausituation, und/oder anderen.

Das Erfassen einer von dem Fahrzeug befahrenen Fahrspur aus den mehreren Fahrspuren für die Fahrtrichtung des Fahrzeugs ist erforderlich, um eine Position der zu bildenden Rettungsgasse bestimmen zu können. Dabei kann die Position der Rettungsgasse beispielsweise abhängig von einer Position des Fahrzeugs, d.h. abhängig von nationalen Regelungen, bestimmt werden. Hierfür kann eine Bestimmung einer Fahrzeugposition erforderlich sein, beispielsweise basierend auf Satellitennavigationsdaten eines globalen Navigationssatellitensystems (GNSS). Das Erfassen einer von dem Fahrzeug befahrenen Fahrspur aus den mehreren Fahrspuren für die Fahrtrichtung des Fahrzeugs erfolgt vorzugsweise basierend auf von dem wenigstens einen Umgebungssensor bereitgestellter Sensorinformation. Alternativ oder zusätzlich kann die von dem Fahrzeug befahrene Fahrspur basierend auf empfangenen Satellitennavigationsdaten bestimmt werden, insbesondere wenn die Satellitennavigationsdaten eine hohe Genauigkeit aufweisen. Diese Genauigkeit lässt sich beispielsweise durch Differenzmethoden (Differential-GPS/DGPS) erzielen, wodurch sogar Genauigkeiten im Zentimeterbereich oder besser erzielt werden können. Auch durch die Verwendung von satellitengestützten Verbesserungssystemen (SBAS), die Korrekturdaten verbreiten, können hohe Genauigkeiten von beispielsweise einem Meter erreicht werden.

Das Erfassen einer Position des Fahrzeugs zu umgebenden Fahrzeugen und/oder einer oder mehreren Begrenzung(en) von Fahrspuren und/oder der Fahrbahn erfolgt basierend auf von dem wenigstens einen Umgebungssensor bereitgestellter Sensorinformation. Die Sensorinformation kann beispielsweise nur Information aus einem Nahbereich umfassen, wie sie typischerweise von an dem Fahrzeug angebrachten Ultraschallsensoren bereitgestellt wird. In dem Nahbereich liefern die Ultraschallsensoren zuverlässige Informationen über Hindernisse, d.h. beim Fahren in einem Stau Information über benachbarte Fahrzeuge, die in Bezug auf Reichweite und Genauigkeit ausreichend ist, um eine Rettungsgasse zu bilden. Alternativ können andere Umgebungssensoren verwendet werden, die einen entfernteren Umgebungsbereich um das Fahrzeug erfassen. Vorzugsweise handelt es sich bei dem wenigstens einen Umgebungssensor um Umgebungssensoren, die an dem Fahrzeug bereits vorhanden sind, beispielsweise um andere Fahrunterstützungsfunktionen zu realisieren (z.B. zum autonomen oder halbautonomen Parken des Fahrzeugs, und/oder zur Totwinkelüberwachung), und die von dem Fahrunterstützungssystem zum Bilden der Rettungsgasse verwendet werden.

In vorteilhafter Ausgestaltung der Erfindung weist das Fahrunterstützungssystem zwei Ultraschallsensoren auf, die an dem Fahrzeug derart angebracht sind, um seitliche Abstände zu Hindernissen, wie umgebenden Fahrzeugen, die sich rechts oder links neben dem Fahrzeug befinden, zu erfassen, und das Fahrunterstützungssystem ist ausgeführt, die Erfassung der von dem Fahrzeug befahrenen Fahrspur basierend auf den seitlichen Abständen zu den Hindernissen durchzuführen, und/oder das Fahrunterstützungssystem ist ausgeführt, die erforderliche Positionsänderung des Fahrzeugs zur Bildung der Rettungsgasse basierend auf den seitlichen Abständen zu den Hindernissen zu bestimmen. Derartige seitlich angebrachte Ultraschallsensoren werden beispielsweise an aktuellen Fahrzeugen verwendet, um eine Parklückenvermessung durchzuführen, beispielsweise zum autonomen oder halbautonomen Parken des Fahrzeugs, und/oder zur Totwinkelüberwachung, so dass diese bereits an dem Fahrzeug befindlichen Ultraschallsensoren für das vorliegenden Fahrunterstützungssystem zusätzlich verwendet werden können, ohne dass zusätzliche Umgebungssensoren erforderlich werden. Durch das Erfassen der seitlichen Abstände zu Hindernissen, wie hier einem umgebenden Fahrzeug, das sich rechts oder links neben dem Fahrzeug befindet, mit den beiden Ultraschallsensoren erfolgt eine einfache Erfassung der Position des Fahrzeugs relativ zu umgebenden Fahrzeugen. Dies betrifft insbesondere die Seite, auf der die Rettungsgasse gebildet werden muss. Allerdings ist es auch wichtig, den Abstand zu den umgebenden Fahrzeugen auf der Seite zu ermitteln, zu der sich das Fahrzeug bewegen muss, um die Rettungsgasse zu bilden. Dadurch wird sichergestellt, dass die erforderliche Positionsänderung des Fahrzeugs zur Bildung der Rettungsgasse nicht zu einer Kollision mit einem umgebenden Fahrzeug oder auch einem anderen Hindernis führt. Somit kann lediglich basierend auf der Position des Fahrzeugs relativ zu den umgebenden Fahrzeugen, wie sie von den beiden Ultraschallsensoren ermittelt wurde, die erforderliche Positionsänderung des Fahrzeugs zur Bildung der Rettungsgasse bestimmt werden. Basierend auf den mit den zwei Ultraschallsensoren erfassten seitlichen Abständen zu Hindernissen kann auch eine einfache Erfassung der von dem Fahrzeug befahrenen Fahrspur durchgeführt werden, indem beispielsweise von den beiden Ultraschallsensoren ermittelte Abstandswerte verglichen werden. Beispielsweise ist (bei Rechtsverkehr) auf einer rechten Fahrspur einer Autobahn zu erwarten, dass der Abstand zu einer neben einem Standstreifen befindlichen Leitplanke oder einer andersartigen Fahrbahnbegrenzung größer ist als zu einem benachbarten Fahrzeug auf einer benachbarten Fahrspur. Entsprechendes gilt umgekehrt für eine linke Fahrspur. Bei einer mittleren Fahrspur ist zu erwarten, dass die Abstände zu den umgebenden Fahrzeugen auf beiden Seiten ähnlich oder sogar näherungsweise gleich sind.

Das Bestimmen einer erforderlichen Positionsänderung des Fahrzeugs zur Bildung der Rettungsgasse basierend auf der von dem Fahrzeug befahrenen Fahrspur und der Position des Fahrzeugs zu umgebenden Fahrzeugen und/oder einer oder mehreren Begrenzung(en) von Fahrspuren und/oder der Fahrbahn kann darauf beschränkt sein, dass die Positionsänderung des Fahrzeugs innerhalb der jeweiligen Fahrspur erfolgt. Alternativ kann die Positionsänderung des Fahrzeugs über eine Begrenzung der Fahrspur, auf der sich das Fahrzeug befindet, hinausgehen, beispielsweise in den Bereich eines Standstreifens oder einer anderen Fahrspur auf einer der Rettungsgasse gegenüberliegenden Seite des Fahrzeugs. Die Positionsänderung kann ausgehend von der aktuellen Position als relative Positionsänderung oder als eine absolute Position, die zur Bildung der Rettungsgasse einzunehmen ist, bestimmt werden.

Das Ausgeben der erforderlichen Positionsänderung des Fahrzeugs zur Bildung der Rettungsgasse kann auf unterschiedliche Weise erfolgen, wie nachstehend angegeben ist. Die Ausgabe erfolgt insbesondere abhängig von einer Fähigkeit des Fahrzeugs zum autonomen oder halbautonomen Fahren und einer Verfügbarkeit einer Benutzerschnittstelle zur Ausgabe der erforderlichen Positionsänderung des Fahrzeugs.

In vorteilhafter Ausgestaltung der Erfindung umfasst das Erfassen einer Fahrsituation auf einer Straße mit einer Fahrbahn mit mehreren Fahrspuren für eine Fahrtrichtung des Fahrzeugs ein Ermitteln einer Fahrzeugposition basierend auf empfangenen Satellitenpositionssignalen eines globalen Navigationssatellitensystems und ein Erfassen der Fahrsituation basierend auf einer zu der Fahrzeugposition gehörenden Fahrsituationsinformation. Die Satellitenpositionssignale des globalen Navigationssatellitensystems (GNSS) geben eine absolute Position des Fahrzeugs auf der Erdoberfläche an. Die Fahrsituationsinformation kann Teil von Karteninformation sein, die zur Navigation verwendet wird, und die Information über eine Anzahl von Fahrspuren für mögliche Fahrtrichtungen umfasst. Die Fahrsituationsinformation kann lokal in dem Fahrzeug gespeichert sein, insbesondere in einem Speicher des Fahrunterstützungssystems.

In vorteilhafter Ausgestaltung der Erfindung umfasst das Erfassen einer Fahrsituation auf der Straße mit einer Fahrbahn mit mehreren Fahrspuren für eine Fahrtrichtung des Fahrzeugs ein Erfassen der Fahrsituation basierend auf von dem wenigstens einen Umgebungssensor bereitgestellter Sensorinformation. Eine Verwendung von LiDARbasierten Umgebungssensoren, Kameras, und/oder Radarsensoren zur Erfassung der Umgebung des Fahrzeugs ist für verschiedene Fahrunterstützungsfunktionen bereits weit verbreitet und erlaubt eine Erfassung der Fahrsituation in Bezug auf die Anzahl der Fahrspuren für die aktuelle Fahrtrichtung. Entsprechende Systeme sind als solche bekannt und können daher hier einfach verwendet werden, um die Fahrsituation korrekt zu erfassen. Beispielsweise kann eine Erfassung von Fahrspuren in einem Kamerabild erfolgen. Alternativ oder zusätzlich kann eine indirekte Erfassung von Fahrspuren durch eine Erfassung von benachbarten Fahrzeugen, insbesondere zusammen mit einer Erfassung einer Bewegung von benachbarten Fahrzeugen, erfolgen.

In vorteilhafter Ausgestaltung der Erfindung umfasst das Ermitteln einer Stausituation auf der Straße ein Empfangen von Verkehrsinformation für die Straße, insbesondere nach dem TMC-Standard. Die Verkehrsinformation kann beispielsweise nach dem TMC (Traffic Message Channel) genannten System als Rundfunkinformation übertragen werden. Alternativ kann die Verkehrsinformation über beliebige Kommunikationsinfrastruktur übertragen werden, beispielsweise über eine mobile Datenverbindung (UMTS, LTE, 5G, oder anderer). Die empfangene Verkehrsinformation kann mit einer aktuellen Fahrzeugposition abgeglichen werden, beispielsweise einer GPS-Position, und ggf. zusätzlich mit einer Karteninformation zur Zuordnung der empfangenen Verkehrsinformation zu der aktuellen Position des Fahrzeugs.

In vorteilhafter Ausgestaltung der Erfindung umfasst das Ermitteln einer Stausituation auf der Straße ein Ermitteln von Odometriedaten des Fahrzeugs, insbesondere einer Fahrgeschwindigkeit des Fahrzeugs. So kann basierend auf den Odometriedaten beispielsweise ermittelt werden, ob und mit welcher Geschwindigkeit sich das Fahrzeug bewegt. Die Stausituation liegt beispielsweise vor, wenn sich das Fahrzeug nicht bewegt, wenn sich das nur mit einer geringen Geschwindigkeit unterhalb einer Grenzgeschwindigkeit bewegt, oder wenn eine der vorgenannten Bedingungen über einen Mindestzeitraum erfüllt ist, beispielsweise, wenn sich das Fahrzeug über einen Zeitraum von einer Minute nicht bewegt.

In vorteilhafter Ausgestaltung der Erfindung umfasst das Ermitteln einer Stausituation auf der Straße ein Ermitteln der Stausituation basierend auf von dem wenigstens einen Umgebungssensor bereitgestellter Sensorinformation, insbesondere basierend auf Abständen zu umgebenden Fahrzeugen und/oder basierend auf Abständen zu einer oder mehreren Begrenzung(en) von Fahrspuren und/oder der Fahrbahn. Beispielsweise kann basierend auf einer Bewegung von stationären Hindernissen relativ zu dem Fahrzeug eine Fahrgeschwindigkeit bestimmt werden, wodurch die Stausituation wie oben unter Bezug auf die Verwendung von Odometriedaten bestimmt werden kann. Zusätzlich oder alternativ kann die Stausituation basierend auf Abständen zu umgebenden Fahrzeugen und/oder basierend auf Abständen zu einer oder mehreren Begrenzung(en) von Fahrspuren und/oder der Fahrbahn erkannt werden, wenn beispielsweise ein vorderer Abstand zu einem vorausfahren Fahrzeug und/oder ein hinterer Abstand zu einem nachfolgenden Fahrzeug besonders gering ist, wenn eine Differenzgeschwindigkeit zu Fahrzeugen auf einer benachbarten Fahrspur sehr gering oder sogar Null ist, oder ähnlichem.

In vorteilhafter Ausgestaltung der Erfindung umfasst das Verfahren einen Schritt zum Vermessen der Rettungsgasse. Das Vermessen der Rettungsgasse betrifft insbesondere ein Ermitteln eines seitlichen Abstands zu einem Fahrzeug auf einer hinter der Rettungsgasse befindlichen Fahrspur. Das Vermessen der Rettungsgasse erfolgt basierend auf Sensorinformation des wenigstens einen Umgebungssensors. Insbesondere wird der seitliche Abstand zu dem Fahrzeug auf der hinter der Rettungsgasse befindlichen Fahrspur mit einem Ultraschallsensor ermittelt, der an dem Fahrzeug derart angebracht ist, um seitliche Abstände zu Hindernissen, wie umgebenden Fahrzeugen, die sich rechts oder links neben dem Fahrzeug befinden, zu erfassen. Durch das Vermessen kann überprüft werden, ob die Rettungsgasse eine für Einsatzfahrzeuge ausreichende Breite aufweist. Wenn beim Vermessen der Rettungsgasse festgestellt werden sollte, dass dies nicht der Fall ist, kann ggf. ein zusätzliches Bestimmen einer erforderlichen Positionsänderung des Fahrzeugs durchgeführt werden, um die Rettungsgasse mit einer ausreichenden Breite zu bilden. Beispielsweise kann die Rettungsgasse gebildet werden, indem eine zunächst eine auf die aktuelle Fahrspur beschränkte erforderliche Positionsänderung des Fahrzeugs bestimmt wird. Dadurch können Schäden an dem Fahrzeug zuverlässig vermieden werden. Im Anschluss wird die Rettungsgasse vermessen. Wenn die Breite der Rettungsgasse nicht ausreichend ist, kann die die Rettungsgasse gebildet werden, indem die Positionsänderung des Fahrzeugs ohne eine entsprechende Beschränkung auf die aktuelle Fahrspur bestimmt wird. Dabei werden sinnvollerweise Positionsänderungen, die eine Beschädigung des Fahrzeugs oder eine Behinderung oder Gefährdung anderer Verkehrsteilnehmer bewirken würden, möglichst vermieden.

In vorteilhafter Ausgestaltung der Erfindung umfasst das Ausgeben der erforderlichen Positionsänderung des Fahrzeugs zur Bildung der Rettungsgasse ein Ausgeben der erforderlichen Positionierung über eine Benutzerschnittstelle des Fahrzeugs an einen Fahrzeugführer. Das Ausgeben der erforderlichen Positionsänderung des Fahrzeugs zur Bildung der Rettungsgasse kann über eine Anzeigevorrichtung, insbesondere einen Bildschirm oder eine Warnleuchte, als optische Ausgabe oder über einen Lautsprecher als akustische Ausgabe erfolgen. Dies kann eine Aktion des Fahrzeugs erforderlich machen, um die Rettungsgasse zu bilden, oder die Ausgabe erfolgt als zusätzliche Information an Fahrzeuginsassen, um diese auf ein autonomes Bilden der Rettungsgasse durch das Fahrzeug hinzuweisen.

Alternativ oder zusätzlich umfasst das Ausgeben der erforderlichen Positionsänderung des Fahrzeugs zur Bildung der Rettungsgasse ein Ausgeben der erforderlichen Positionierung über eine interne Fahrzeugschnittstelle des Fahrzeugs zum autonomen oder teilautonomen Bewegen des Fahrzeugs gemäß der erforderlichen Positionsänderung des Fahrzeugs zur Bildung der Rettungsgasse. Das Fahrzeug wird also ohne Eingriff eines Fahrzeugführers gemäß der erforderlichen Positionsänderung bewegt, um die Rettungsgasse zu bilden.

In vorteilhafter Ausgestaltung der Erfindung umfasst das Verfahren einen zusätzlichen Schritt zum Erkennen einer Annäherung eines Einsatzfahrzeugs an das Fahrzeug. Die Annäherung des Einsatzfahrzeugs an das Fahrzeug kann beispielsweise mit dem wenigstens einen Umgebungssensor erfolgen, wobei beispielsweise das Einsatzfahrzeug selber und/oder das Bilden der Rettungsgasse hinter dem Fahrzeug erfasst werden kann. Es kann also beispielsweise eine optische Erkennung der Annäherung des Einsatzfahrzeugs erfolgen. Dazu ist beispielsweise eine optische Kamera mit einer Blickrichtung zu einer Rückseite des Fahrzeugs an dem Fahrzeug angebracht. Alternativ oder zusätzlich kann das Fahrzeug beispielsweise eine akustische Erkennung der Annäherung des Einsatzfahrzeugs an das Fahrzeug durchführen, indem die Umgebung auf typische akustische Signale von Einsatzfahrzeugen (Sirenengeräusche, z.B. ein Martinshorn) überwacht wird. Dazu weist das Fahrunterstützungssystem beispielsweise ein Mikrofon auf.

In vorteilhafter Ausgestaltung der Erfindung ist der wenigstens eine Umgebungssensor als Ultraschallsensor und/oder als optische Kamera ausgeführt. Das Fahrunterstützungssystem kann einen Einzelsensor als Umgebungssensor zur Erfassung der Umgebung des Fahrzeugs oder mehrere Umgebungssensoren zur gemeinsamen Erfassung der Umgebung umfassen. Bei der Verwendung von mehreren Umgebungssensoren kann es sich um identische Arten von Umgebungssensoren, beispielsweise eine Mehrzahl Ultraschallsensoren, oder eine Mehrzahl optische Kameras, beispielsweise eine optische Kamera an jeder Seite des Fahrzeugs, oder unterschiedliche Arten von Umgebungssensoren handeln, beispielsweise eine Mehrzahl Ultraschallsensoren zusammen mit einer Frontkamera oder eine Mehrzahl Ultraschallsensoren zusammen mit einer Mehrzahl optischer Kameras. Vorzugsweise umfasst das Fahrunterstützungssystem sowohl wenigstens eine optische Kamera oder mehrere optische Kameras und eine Mehrzahl Ultraschalsensoren, wobei die eine einfache und sehr kostengünstige Überwachung von Abständen zu benachbarten Fahrzeugen im Nahbereich ermöglichen.

In vorteilhafter Ausgestaltung der Erfindung umfasst das Fahrunterstützungssystem einen Empfänger für Satellitenpositionssignale eines globalen Navigationssatellitensystems. Das globale Navigationssatellitensystem (GNSS = global navigation satellite system) ermöglicht eine Bestimmung der Position des Fahrzeugs, die für verschiedene Funktionen des Fahrunterstützungssystems verwendet werden kann. So kann basierend auf der Position des Fahrzeugs beispielsweise eine Fahrsituation auf der Straße mit einer Fahrbahn mit mehreren Fahrspuren für eine Fahrtrichtung des Fahrzeugs erfasst werden, oder Verkehrsinformation zu einer aktuellen Position zugeordnet werden, um eine Stausituation auf der Straße zu ermitteln. Auch für das Erfassen einer von dem Fahrzeug befahrenen Fahrspur aus den mehreren Fahrspuren für die Fahrtrichtung des Fahrzeugs kann die Position des Fahrzeugs verwendet werden. Bei einer hinreichenden Genauigkeit kann beispielsweise eine Position des Fahrzeugs zu Begrenzung(en) von Fahrspuren und/oder der Fahrbahn bestimmt werden. Vorzugsweise weist der Empfänger für Satellitenpositionssignale eines globalen Navigationssatellitensystems eine hohe Genauigkeit auf, beispielsweise durch die Verwendung von Differenzmethoden (Differential-GPS/DGPS) und/oder von satellitengestützten Verbesserungssystemen (SBAS), die Korrekturdaten verbreiten.

In vorteilhafter Ausgestaltung der Erfindung umfasst das Fahrunterstützungssystem einen Empfänger für Verkehrsinformation, insbesondere nach dem TMC-Standard. Basierend auf der Verkehrsinformation kann eine Stausituation auf der Straße ermittelt werden. Die empfangene Verkehrsinformation kann mit einer aktuellen Fahrzeugposition abgeglichen werden, beispielsweise einer GPS-Position, und ggf. zusätzlich mit einer Karteninformation zur Zuordnung der empfangenen Verkehrsinformation zu der aktuellen Position des Fahrzeugs.

In vorteilhafter Ausgestaltung der Erfindung ist das Fahrunterstützungssystem zum autonomen oder zumindest teilautonomen Fahren des Fahrzeugs ausgeführt. Dies ermöglicht ein autonomes Bilden der Rettungsgasse basierend auf der erforderlichen Positionsänderung des Fahrzeugs zur Bildung der Rettungsgasse. Zusätzlich kann das Fahrunterstützungssystem eine Benutzerschnittstelle zur Ausgabe einer Information bezüglich der autonom durchgeführten Positionsänderung des Fahrzeugs an die Fahrzeuginsassen umfassen.

In vorteilhafter Ausgestaltung der Erfindung ist das Fahrunterstützungssystem zum Bilden einer Rettungsgasse integral mit wenigstens einer weiteren Unterstützungsfunktion ausgeführt. Vorzugsweise kann das Fahrunterstützungssystem zum Bilden einer Rettungsgasse als Ergänzung zu einem anderen Fahrunterstützungssystem installiert werden besonders bevorzugt nutzt das Fahrunterstützungssystem zum Bilden einer Rettungsgasse den wenigstens einen Umgebungssensor des anderen Fahrunterstützungssystems. Besonders bevorzugt ist das Fahrunterstützungssystem zum Bilden einer Rettungsgasse durch eine Software, welche die Hardware des anderen Fahrunterstützungssystems verwendet, gebildet. Dadurch kann das Fahrunterstützungssystem zum Bilden einer Rettungsgasse besonders kostengünstig bereitgestellt werden.

Nachfolgend wird die Erfindung unter Bezugnahme auf die anliegende Zeichnung anhand einer bevorzugten Ausführungsform näher erläutert. Die dargestellten Merkmale können sowohl jeweils einzeln als auch in Kombination einen Aspekt der Erfindung darstellen. Merkmale verschiedener Ausführungsbeispiele sind übertragbar von einem Ausführungsbeispiel auf ein anderes.

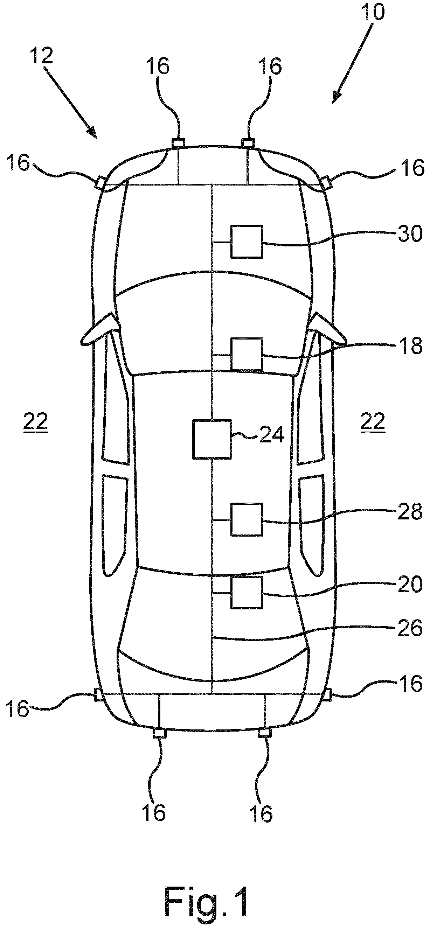

Es zeigt
- Fig. 1: eine schematische Ansicht eines Fahrzeugs mit einem Fahrunterstützungssystem zum Bilden einer Rettungsgasse gemäß einer ersten, bevorzugten Ausführungsform mit einer Frontkamera, einer Heckkamera und einer Mehrzahl Ultraschallsensoren als Umgebungssensoren,

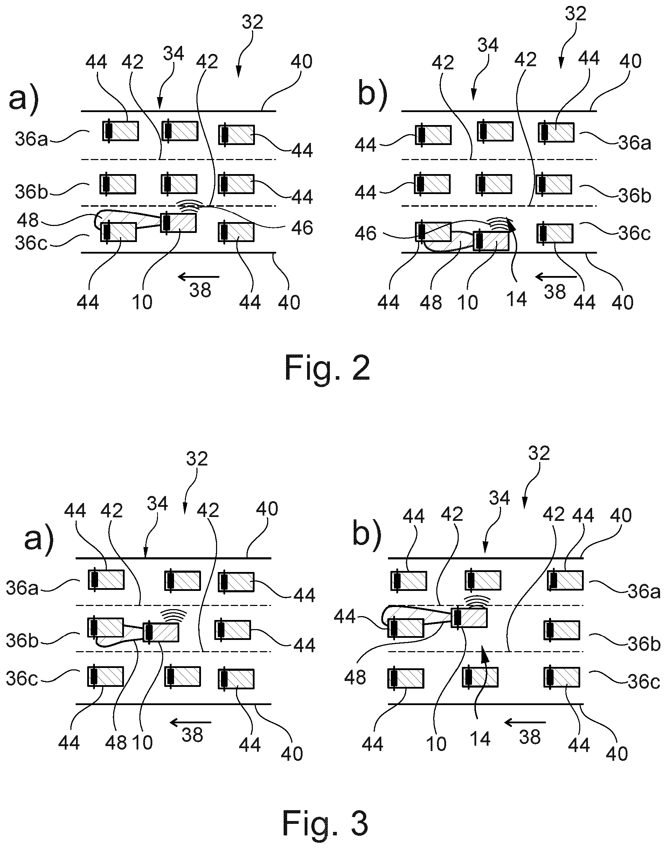

- Fig. 2: eine schematische Darstellung des Fahrzeugs aus Fig. 1 in einer Fahrsituation auf einer Straße mit einer Fahrbahn mit mehreren Fahrspuren für eine Fahrtrichtung des Fahrzeugs zusammen mit einer Mehrzahl Drittfahrzeuge, wobei das Fahrzeug zur Bildung der Rettungsgasse bezogen auf eine Fahrtrichtung eine erforderliche Positionsänderung nach links durchführt, mit einer Darstellung vor und nach der Bildung der Rettungsgasse,
- Fig. 3: eine schematische Darstellung des Fahrzeugs aus Fig. 1 in einer Fahrsituation auf einer Straße mit einer Fahrbahn mit mehreren Fahrspuren für eine Fahrtrichtung des Fahrzeugs zusammen mit einer Mehrzahl Drittfahrzeuge, wobei das Fahrzeug zur Bildung der Rettungsgasse bezogen auf eine Fahrtrichtung eine erforderliche Positionsänderung nach rechts durchführt, mit einer Darstellung vor und nach der Bildung der Rettungsgasse, und

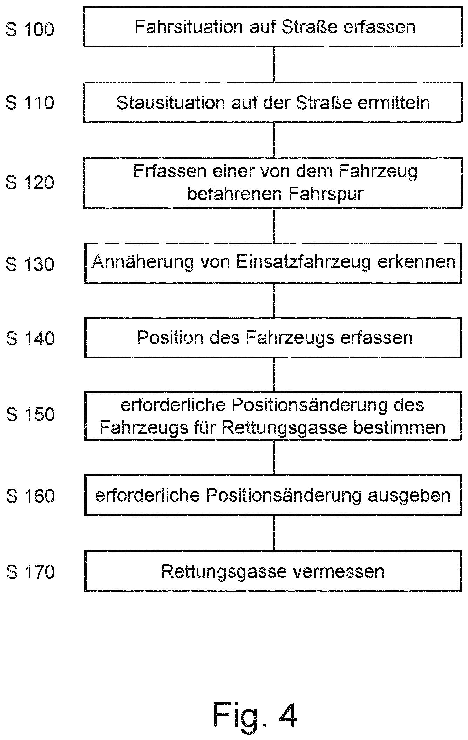

- Fig. 4: ein Ablaufdiagramm zur Durchführung eines Verfahrens zum Bilden einer Rettungsgasse, wie es von dem Fahrzeug mit dem Fahrunterstützungssystem aus Fig. 1 durchgeführt wird, in Übereinstimmung mit der ersten Ausführungsform.

Die Figur 1 zeigt ein Fahrzeug 10 mit einem Fahrunterstützungssystem 12 zum Bilden einer Rettungsgasse 14 gemäß einer ersten, bevorzugten Ausführungsform der Erfindung.

Das Fahrunterstützungssystem 12 umfasst in diesem Ausführungsbeispiel eine Mehrzahl Umgebungssensoren 16, 18, 20 zum Erfassen einer Umgebung 22 des Fahrzeugs 10. Die Umgebungssensoren 16, 18, 20 umfassen eine Mehrzahl Ultraschallsensoren 16, die an Längs- und Querseiten des Fahrzeugs 10 angebracht sind, eine Frontkamera 18 und eine Heckkamera 20.

Das Fahrunterstützungssystem 12 umfasst außerdem eine Steuerungseinrichtung 24 und einen Datenbus 26. Die Steuerungseinrichtung 24 ist über den Datenbus 26 mit den Umgebungssensoren 16, 18, 20 verbunden.

In diesem Ausführungsbeispiel umfasst das Fahrunterstützungssystem 12 weiterhin einen Empfänger 28 für Satellitenpositionssignale eines globalen Navigationssatellitensystems (GNSS = global navigation satellite system), das eine Position des Fahrzeugs 10 bestimmt. Der Empfänger 28 für die Satellitenpositionssignale weist eine hohe Genauigkeit auf und unterstützt Differential-GPS/DGPS und/oder SBAS. Der Empfänger 28 für die Satellitenpositionssignale ist über den Datenbus 26 mit der Steuerungseinrichtung 24 verbunden, um die empfangenen Satellitenpositionssignale oder die Position des Fahrzeugs 10 an die Steuerungseinrichtung 24 zu übertragen.

Auch umfasst das Fahrunterstützungssystem 12 einen Empfänger 30 für Verkehrsinformation nach dem TMC-Standard. Auch der Empfänger 30 für Verkehrsinformation nach dem TMC-Standard ist über den Datenbus 26 mit der Steuerungseinrichtung 24 verbunden, um die empfangene Verkehrsinformation an die Steuerungseinrichtung 24 zu übertragen.

Das Fahrunterstützungssystem 12 ist in diesem Ausführungsbeispiel zum autonomen Fahren des Fahrzeugs 10 ausgeführt. Das autonome Fahren des Fahrzeugs 10 umfasst sowohl eine Längsführung, d.h. ein Beschleunigen bzw. Verzögern des Fahrzeugs 10, sowie eine Querführung, d.h. Lenkbewegungen. Dies ermöglicht ein autonomes Bilden der Rettungsgasse 14 durch das Fahrzeug 10, wie nachstehend beschrieben ist.

Das Fahrunterstützungssystem 12 zum Bilden der Rettungsgasse 14 ist in diesem Ausführungsbeispiel integral mit wenigstens einer weiteren Unterstützungsfunktion des Fahrzeugs 10 ausgeführt. Das Fahrunterstützungssystem 12 zum Bilden der Rettungsgasse 14 ist im Detail durch eine Software bereitgestellt, welche die Hardware des anderen Fahrunterstützungssystems verwendet und die Funktion zum Bilden der Rettungsgasse 14 durchführt.

Das Fahrunterstützungssystem 12 ist ausgeführt, das nachstehend beschrieben Verfahren zum Bilden der Rettungsgasse 14 durchzuführen. Das Verfahren ist in dem Ablaufdiagramm in Figur 4 dargestellt und wird unter zusätzlichem Bezug auf die Figuren 2 und 3 erläutert.

Das Verfahren beginnt mit Schritt S100, der ein Erfassen einer Fahrsituation auf einer Straße 32 mit einer Fahrbahn 34 mit mehreren Fahrspuren 36 für eine Fahrtrichtung 38 des Fahrzeugs 10 betrifft. Es erfolgt eine Unterscheidung von Fahrsituationen mit einer oder mehreren Fahrspuren 36 für die aktuelle Fahrtrichtung 38 des Fahrzeugs 10, d.h. ob sich das Fahrzeug 10 auf einer Straße 32 mit einer Fahrspur 36 oder mit mehreren Fahrspuren 36 für die aktuelle Fahrtrichtung 38 befindet.

Die Figuren 2 und 3 stellen entsprechende Fahrsituationen mit drei Fahrspuren 36 dar, einer rechten Fahrspur 36a, einer mittleren Fahrspur 36b und einer linke Fahrspur 36c, jeweils bezogen auf die Fahrtrichtung 38. Die Fahrbahn 34 ist dabei von Begrenzungslinien 40, die Begrenzungen der Fahrbahn 34 bilden, begrenzt und durch Trennlinien 42, die Begrenzungen der Fahrpuren 36 bilden, in die einzelnen Fahrspuren 36 unterteilt. Die Begrenzungen 42 der Fahrspuren 36 und die Begrenzungen 40 der Fahrbahn 34 sind hier als Markierungen auf der Fahrbahn 34 ausgebildet. Die Darstellung in den Figuren 2 und 3 zeigt zusätzlich mehrere umgebende Fahrzeuge 44, im Weiteren als Drittfahrzeuge 44 bezeichnet, die sich auf den verschiedenen Fahrbahnen 36 vor, hinter und neben dem Fahrzeug 10 befinden. Die Figuren 2 und 3 umfassen jeweils zwei einzelne Darstellungen vor (a)) und nach (b)) dem Bilden der Rettungsgasse,

Das Erfassen der Fahrsituation umfasst in diesem Ausführungsbeispiel ein Ermitteln einer Fahrzeugposition basierend auf von dem Empfänger 28 für Satellitenpositionssignale des globalen Navigationssatellitensystems und ein Erfassen der Fahrsituation basierend auf einer Fahrzeugposition, die aus den empfangenen Satellitenpositionssignale ermittelt wird, und zu der Fahrzeugposition gehörenden Fahrsituationsinformation. Die Fahrsituationsinformation ist Teil von Karteninformation, die Information über eine Anzahl der Fahrspuren 36 für die Fahrtrichtung 38 umfasst. Die Fahrsituationsinformation ist lokal in einem Speicher des Fahrunterstützungssystems 12 des Fahrzeugs 10 gespeichert.

In einer alternativen Ausführungsform erfolgt das Erfassen der Fahrsituation auf der Straße 32 mit einer Fahrbahn 34 mit mehreren Fahrspuren 36 für eine Fahrtrichtung 38 basierend auf von den Umgebungssensoren 16, 18, 20 bereitgestellter Sensorinformation. Beispielsweise kann eine Erfassung der Fahrspuren 38 in einem Kamerabild der Frontkamera 18 erfolgen. Alternativ oder zusätzlich kann eine indirekte Erfassung der Fahrspuren 36 durch eine Erfassung von benachbarten Drittfahrzeugen 44 erfolgen, insbesondere zusammen mit einer Erfassung einer Bewegung der benachbarten Drittfahrzeuge 44 relativ zu dem Fahrzeug 10.

Wenn die Straße 32 nur eine Fahrspur 36 für die Fahrtrichtung 38 des Fahrzeugs 10 aufweist, werden die weiteren Schritte nicht durchgeführt, bis eine Straße 32 mit einer Mehrzahl Fahrspuren 36 für die Fahrtrichtung 38 des Fahrzeugs 10 erfasst wird.

In Schritt S110 erfolgt ein Ermitteln einer Stausituation auf der Straße 32, d.h. ein Stau wird erkannt, der die Bildung der Rettungsgasse 14 erforderlich machen kann. Die Stausituation ist durch einen anhaltenden Stillstand des Verkehrs, d.h. des Fahrzeugs 10 und der Drittfahrzeuge 44, oder auch ein entsprechendes Fahren mit niedrigen Fahrtgeschwindigkeit definiert. Dazu werden Odometriedaten des Fahrzeugs 10 ermittelt, insbesondere eine Fahrgeschwindigkeit des Fahrzeugs 10. So kann basierend auf den Odometriedaten beispielsweise ermittelt werden, ob und mit welcher Geschwindigkeit sich das Fahrzeug 10 bewegt. Die Stausituation liegt beispielsweise vor, wenn sich das Fahrzeug 10 nicht bewegt.

In einer alternativen Ausführungsform erfolgt das Ermitteln der Stausituation auf der Straße 32 von den Umgebungssensoren 16, 18, 20 bereitgestellter Sensorinformation, insbesondere basierend auf Abständen zu umgebenden Drittfahrzeugen 44 und basierend auf Abständen zu den Fahrspurbegrenzungen 42 wie auch den Fahrbahnbegrenzungen 40 der Straße 32. Beispielsweise kann basierend auf einer Bewegung von stationären Hindernissen relativ zu dem Fahrzeug 10 eine Fahrgeschwindigkeit bestimmt werden. Zusätzlich oder alternativ kann die Stausituation basierend auf Abständen zu den umgebenden Drittfahrzeugen 44 und/oder basierend auf Abständen zu den Fahrspurbegrenzungen 42 wie auch den Fahrbahnbegrenzungen 40 der Straße 32 erkannt werden, wenn beispielsweise ein vorderer Abstand zu einem vorausfahren Drittfahrzeug 44 und/oder ein hinterer Abstand zu einem nachfolgenden Drittfahrzeug 44 besonders gering ist, wenn eine Differenzgeschwindigkeit zu Drittfahrzeugen 44 auf einer benachbarten Fahrspur 36 gering oder sogar Null ist, oder ähnlichem.

Schritt S120 betrifft ein Erfassen einer von dem Fahrzeug 10 befahrenen Fahrspur 36 aus den mehreren Fahrspuren 36 für die Fahrtrichtung 38 des Fahrzeugs 10. Basierend auf dem Erfassen der von dem Fahrzeug 10 befahrenen Fahrspur 36 kann eine Position für die zu bildende Rettungsgasse 14 bestimmen werden. Die von dem Fahrzeug 10 befahrene Fahrspur 36 wird aus den mehreren Fahrspuren 36 für die Fahrtrichtung 38 des Fahrzeugs 10 vorzugsweise basierend auf von den Umgebungssensoren 16, 18, 20 bereitgestellter Sensorinformation erfasst. Alternativ oder zusätzlich kann die von dem Fahrzeug 10 befahrene Fahrspur 36 basierend auf empfangenen Satellitennavigationsdaten bestimmt werden.

Schritt S130 betrifft ein Erkennen einer Annäherung eines Einsatzfahrzeugs an das Fahrzeug 10. Die Annäherung des Einsatzfahrzeugs an das Fahrzeug 10 erfolgt in diesem Ausführungsbeispiel basierend auf der von den Umgebungssensoren 16, 18, 20 bereitgestellten Sensorinformation. Es kann also beispielsweise eine optische Erkennung der Annäherung des Einsatzfahrzeugs mit der Heckkamera 20 erfolgen. Alternativ oder zusätzlich kann das Fahrzeug 10 beispielsweise eine akustische Erkennung der Annäherung des Einsatzfahrzeugs an das Fahrzeug 10 durchführen, indem die Umgebung 22 auf typische akustische Signale von Einsatzfahrzeugen (Sirenengeräusche, z.B. ein Martinshorn) überwacht wird. Dazu weist das Fahrunterstützungssystem 12 beispielsweise ein Mikrofon auf, das außenseitig an dem Fahrzeug angebracht ist.

Schritt S140 betrifft ein Erfassen einer Position des Fahrzeugs 10 zu umgebenden Drittfahrzeugen 44, den Fahrbahnbegrenzungen 40 und den Fahrspurbegrenzungen 42 basierend auf von den Umgebungssensoren 16, 18, 20 bereitgestellter Sensorinformation. Die Sensorinformation umfasst von den Ultraschallsensoren 16 bereitgestellte Information aus einem Nahbereich sowie von der Frontkamera 18 und der Heckkamera 20 bereitgestellte Information aus einem größeren Abstandsbereich.

Wie in den Figuren 2 und 3 dargestellt ist, senden hier beispielsweise die Ultraschallsensoren 16 Ultraschallpulse 46 aus, die einen Erfassungsbereich 48 abdecken und Reflektionen der Ultraschallpulse 46 von Drittfahrzeugen 44 empfangen, wodurch die Abstände zu diesen Drittfahrzeugen bestimmt werden. Zusätzlich wird von der Frontkamera 18 und der Heckkamera 20 eine Erfassung der Fahrbahnbegrenzungen 40 und der Fahrspurbegrenzungen 42 durchgeführt, wodurch die Abstände zu den Fahrbahnbegrenzungen 40 und den Fahrspurbegrenzungen 42 bestimmt werden.

Schritt S150 betrifft ein Bestimmen einer erforderlichen Positionsänderung des Fahrzeugs 10 zur Bildung der Rettungsgasse 14 basierend auf der von dem Fahrzeug 10 befahrenen Fahrspur 36 und der Position des Fahrzeugs 10 zu umgebenden Drittfahrzeugen 44 sowie den Fahrbahnbegrenzungen 40 und den Fahrspurbegrenzungen 42. So wird in Figur 2, in der sich das Fahrzeug 10 auf der linken Fahrspur 36c befindet, die Rettungsgasse 14 rechts von dem Fahrzeug 10 gebildet, nämlich zwischen der linken Fahrspur 36c und der mittleren Fahrspur 36b. In der Darstellung von Figur 3, in der sich das Fahrzeug 10 auf der mittleren Fahrspur 36b befindet, wird die Rettungsgasse 14 ebenfalls zwischen der linken Fahrspur 36c und der mittleren Fahrspur 36b. Damit wird die Rettungsgasse 14 links von dem Fahrzeug 10 gebildet.

In Schritt S150 wird die erforderliche Positionsänderung des Fahrzeugs 10 zur Bildung der Rettungsgasse 14 innerhalb der jeweiligen Fahrspur 36 des Fahrzeugs 10 bestimmt, d.h. das Fahrzeug 10 soll seine jeweilige Fahrspur 36 zur Bildung der Rettungsgasse 14 nicht verlassen. Alternativ kann die erforderliche Positionsänderung des Fahrzeugs 10 über eine Begrenzung der Fahrspur 36, auf der sich das Fahrzeug 10 befindet, hinausgehen.

In Schritt S160 wird die erforderliche Positionsänderung des Fahrzeugs 10 zur Bildung der Rettungsgasse 14 ausgegeben. Dies umfasst, die erforderliche Positionierung über eine Benutzerschnittstelle des Fahrzeugs 10 an als Information an Fahrzeuginsassen ausgegeben wird, um diese auf ein autonomes Bilden der Rettungsgasse 14 durch das Fahrzeug 10 hinzuweisen. Das Ausgeben umfasst entsprechend ein zusätzliches Ausgeben der erforderlichen Positionierung über eine interne Fahrzeugschnittstelle des Fahrzeugs 10 zum autonomen oder teilautonomen Bewegen des Fahrzeugs 10, wodurch das Fahrzeug 10 zur Bildung der Rettungsgasse 14 in Übereinstimmung mit der erforderlichen Positionsänderung autonom bewegt wird.

In Schritt S170 erfolgt ein Vermessen der nach der durchgeführten Positionsänderung gebildeten Rettungsgasse 14. Das Vermessen der Rettungsgasse 14 betrifft ein Ermitteln eines seitlichen Abstands zu einem Drittfahrzeug 44 auf einer hinter der Rettungsgasse 14 befindlichen Fahrspur 36. Es wird also bei dem Beispiel in Figur 2 ein Abstand zu dem Drittfahrzeug 44 auf der mittleren Fahrspur 36b bestimmt, während bei dem Beispiel in Figur 3 ein Abstand zu dem Drittfahrzeug 44 auf der linken Fahrspur 36c bestimmt wird.

Wenn beim Vermessen der Rettungsgasse 14 festgestellt werden sollte, dass diese keine ausreichenden Abmessungen für Einsatzfahrzeuge aufweist, kann das Verfahren ab Schritt S140 wiederholt werden, wobei dann die Beschränkung der Bestimmung der erforderlichen Positionsänderung des Fahrzeugs 10 auf die eigene Fahrspur 36 aufgehoben wird. Dies kann so lange durchgeführt werden, bis die Rettungsgasse 14 ausreichend groß für die Einsatzfahrzeuge ist. Zusätzlich kann das Vermessen der Rettungsgasse kontinuierlich durchgeführt werden, so dass das Fahrzeug beispielsweise bei einer Positionsänderung eines Drittfahrzeugs 44, die zu einer Verkleinerung der Rettungsgasse 14 führt, eine Positionsänderung durchführen kann, um die Rettungsgasse 14 wieder zu vergrößern.

### Bezugszeichenliste

- 10: Fahrzeug
- 12: Fahrunterstützungssystem
- 14: Rettungsgasse
- 16: Umgebungssensor, Ultraschallsensor
- 18: Umgebungssensor, Frontkamera
- 20: Umgebungssensor, Heckkamera
- 22: Umgebung
- 24: Steuerungseinrichtung
- 26: Datenbus
- 28: Empfänger für Satellitenpositionssignale eines globalen Navigationssatellitensystems
- 30: Empfänger für Verkehrsinformation nach dem TMC-Standard
- 32: Straße
- 34: Fahrbahn
- 36: Fahrspur
- 38: Fahrtrichtung
- 40: Fahrbahnbegrenzung
- 42: Trennlinie, Fahrspurbegrenzung
- 44: Drittfahrzeug, umgebendes Fahrzeug
- 46: Ultraschallpulse
- 48: Erfassungsbereich

## Patentansprüche

1. Verfahren zum Bilden einer Rettungsgasse (14) für ein Fahrzeug (10), wobei das Fahrzeug (10) wenigstens einen Umgebungssensor (16, 18, 20) zum Erfassen einer Umgebung (22) des Fahrzeugs (10) aufweist, umfassend zwei Ultraschallsensoren (16) die an dem Fahrzeug (10) derart angebracht sind, um seitliche Abstände zu Hindernissen, wie umgebenden Fahrzeugen (44), die sich rechts oder links neben dem Fahrzeug (10) befinden, zu erfassen, wobei das Verfahren die Schritte umfasst:
Erfassen (S100) einer Fahrsituation auf einer Straße (32) mit einer Fahrbahn (34) mit mehreren Fahrspuren (36) für eine Fahrtrichtung (38) des Fahrzeugs (10),
Ermitteln (S110) einer Stausituation auf der Straße (32),
Erfassen (S120) einer von dem Fahrzeug (10) befahrenen Fahrspur (36) aus der mehreren Fahrspuren (36) für die Fahrtrichtung (38) des Fahrzeugs (10),
Erfassen (S140) einer Position des Fahrzeugs (10) zu umgebenden Fahrzeugen (44) und/oder einer oder mehreren Begrenzung(en) (40, 42) von Fahrspuren (36) und/oder der Fahrbahn (34) basierend auf von dem wenigstens einen Umgebungssensor (16, 18, 20) bereitgestellter Sensorinformation,
Bestimmen (S150) einer erforderlichen Positionsänderung des Fahrzeugs (10) zur Bildung der Rettungsgasse (14) basierend auf der von dem Fahrzeug (10) befahrenen Fahrspur (36) und der Position des Fahrzeugs (10) zu umgebenden Fahrzeugen (44) und/oder einer oder mehreren Begrenzung(en) (40, 42) von Fahrspuren (36) und/oder der Fahrbahn (34), wobei die erforderliche Positionsänderung des Fahrzeugs (10) zur Bildung der Rettungsgasse (14) basierend auf den seitlichen Abständen zu den Hindernissen bestimmt wird,
und
Ausgeben (S160) der erforderlichen Positionsänderung des Fahrzeugs (10) zur Bildung der Rettungsgasse (14) umfassend ein Ausgeben der erforderlichen Positionierung über eine interne Fahrzeugschnittstelle des Fahrzeugs (10) zum autonomen oder teilautonomen Bewegen des Fahrzeugs (10) gemäß der erforderlichen Positionsänderung des Fahrzeugs (10) zur Bildung der Rettungsgasse (14).

2. Verfahren nach Anspruch 1, **dadurch gekennzeichnet, dass**
die Sensorinformation nur Information aus einem Nahbereich umfasst, insbesondere von an dem Fahrzeug (10) angebrachten Ultraschallsensoren (16).

3. Verfahren nach einem der vorhergehenden Ansprüche, **dadurch gekennzeichnet, dass**
das Erfassen einer Fahrsituation auf einer Straße (32) mit einer Fahrbahn (34) mit mehreren Fahrspuren (36) für eine Fahrtrichtung (38) des Fahrzeugs (10) ein Ermitteln einer Fahrzeugposition basierend auf empfangenen Satellitenpositionssignalen eines globalen Navigationssatellitensystems und ein Erfassen der Fahrsituation basierend auf einer zu der Fahrzeugposition gehörenden Fahrsituationsinformation umfasst.

4. Verfahren nach einem der vorhergehenden Ansprüche, **dadurch gekennzeichnet, dass**
das Erfassen einer Fahrsituation auf einer Straße (32) mit einer Fahrbahn (34) mit mehreren Fahrspuren (36) für eine Fahrtrichtung (38) des Fahrzeugs (10) ein Erfassen der Fahrsituation basierend auf von dem wenigstens einen Umgebungssensor (16, 18, 20) bereitgestellter Sensorinformation umfasst.

5. Verfahren nach einem der vorhergehenden Ansprüche, **dadurch gekennzeichnet, dass**
das Ermitteln einer Stausituation auf der Straße (32) ein Empfangen von Verkehrsinformation, insbesondere nach dem TMC-Standard, für die Straße (32) umfasst.

6. Verfahren nach einem der vorhergehenden Ansprüche, **dadurch gekennzeichnet, dass**
das Ermitteln einer Stausituation auf der Straße (32) ein Ermitteln von Odometriedaten des Fahrzeugs (10), insbesondere einer Fahrgeschwindigkeit des Fahrzeugs (10), umfasst.

7. Verfahren nach einem der vorhergehenden Ansprüche, **dadurch gekennzeichnet, dass**
das Ermitteln einer Stausituation auf der Straße (10) ein Ermitteln der Stausituation basierend auf von dem wenigstens einen Umgebungssensor (16, 18, 20) bereitgestellter Sensorinformation umfasst, insbesondere basierend auf Abständen zu umgebenden Fahrzeugen (44) und/oder basierend auf Abständen zu einer oder mehreren Begrenzung(en) (40, 42) von Fahrspuren (36) und/oder der Fahrbahn (34).

8. Verfahren nach einem der vorhergehenden Ansprüche, **dadurch gekennzeichnet, dass**
das Verfahren einen Schritt zum Vermessen der Rettungsgasse (14) umfasst.

9. Verfahren nach Anspruch 8, **dadurch gekennzeichnet, dass**
das Vermessen der Rettungsgasse (14) ein Ermitteln eines seitlichen Abstands zu einem Fahrzeug auf einer hinter der Rettungsgasse (14) befindlichen Fahrspur betrifft.

10. Verfahren nach Anspruch 8 oder 9, **dadurch gekennzeichnet, dass**
das Vermessen der Rettungsgasse (14) basierend auf Sensorinformation des wenigstens einen Umgebungssensors erfolgt.

11. Verfahren nach Anspruch 9 und/oder 10, **dadurch gekennzeichnet, dass**
der seitliche Abstand zu dem Fahrzeug auf der hinter der Rettungsgasse (14) befindlichen Fahrspur mit einem Ultraschallsensor (16) ermittelt wird, der an dem Fahrzeug (10) derart angebracht ist, um seitliche Abstände zu Hindernissen zu erfassen.

12. Verfahren nach einem der vorhergehenden Ansprüche, **dadurch gekennzeichnet, dass**
das Verfahren einen zusätzlichen Schritt zum Erkennen einer Annäherung eines Einsatzfahrzeugs an das Fahrzeug (10) umfasst.

13. Verfahren nach Anspruch 12, **dadurch gekennzeichnet, dass**
die Annäherung des Einsatzfahrzeugs an das Fahrzeug (10) mit dem wenigstens einen Umgebungssensor erfolgt, oder mit einer optischen Kamera mit einer Blickrichtung zu einer Rückseite des Fahrzeugs, und/oder einer akustischen Erkennung, indem die Umgebung auf typische akustische Signale von Einsatzfahrzeugen überwacht wird, insbesondere mittels eines Mikrofons.

14. Verfahren nach einem der vorhergehenden Ansprüche, **dadurch gekennzeichnet, dass**
es sich bei den bei dem wenigstens einen Umgebungssensor (16, 18, 20) um Umgebungssensoren handelt, die an dem Fahrzeug bereits vorhanden sind, um andere Fahrunterstützungsfunktionen zu realisieren, zum autonomen oder halbautonomen Parken des Fahrzeugs und/oder zur Totwinkelüberwachung.

15. Fahrunterstützungssystem (12) für ein Fahrzeug (10) zum Bilden einer Rettungsgasse (14), umfassend
wenigstens einen Umgebungssensor (16, 18, 20) zum Erfassen einer Umgebung (22) des Fahrzeugs (10), und
eine Steuerungseinrichtung (24), die über einen Datenbus (26) mit dem wenigstens einen Umgebungssensor (16, 18, 20) zum Erfassen der Umgebung (22) des Fahrzeugs (10) verbunden ist,
wobei das Fahrunterstützungssystem (12) ausgeführt ist, das Verfahren zum Bilden einer Rettungsgasse (14) nach einem der vorhergehenden Ansprüche 1 bis 14 durchzuführen, wobei das Fahrunterstützungssystem (12) zum autonomen oder zumindest teilautonomen Fahren des Fahrzeugs (10) ausgeführt ist,
wobei das Fahrunterstützungssystem (10) zwei Ultraschallsensoren (16) aufweist, die an dem Fahrzeug (10) derart angebracht sind, um seitliche Abstände zu Hindernissen, wie umgebenden Fahrzeugen (44), die sich rechts oder links neben dem Fahrzeug (10) befinden, zu erfassen, und
das Fahrunterstützungssystem (10) ist ausgeführt, die erforderliche Positionsänderung des Fahrzeugs (10) zur Bildung der Rettungsgasse (14) basierend auf den seitlichen Abständen zu den Hindernissen zu bestimmen.

16. Fahrunterstützungssystem (12) nach Anspruch 15, **dadurch gekennzeichnet, dass** der wenigstens eine Umgebungssensor (16, 18, 20) als Ultraschallsensor (16) und/oder als optische Kamera (18, 20) ausgeführt ist.

17. Fahrunterstützungssystem (12) nach einem der Ansprüche 15 oder 16, **dadurch gekennzeichnet, dass**
das Fahrunterstützungssystem (12) einen Empfänger (28) für Satellitenpositionssignale eines globalen Navigationssatellitensystems umfasst.

18. Fahrunterstützungssystem (12) nach einem der Ansprüche 15 bis 17, **dadurch gekennzeichnet, dass**
das Fahrunterstützungssystem (12) einen Empfänger (30) für Verkehrsinformation, insbesondere nach dem TMC-Standard, umfasst.

19. Fahrunterstützungssystem (10) nach einem der Ansprüche 15 bis 18, **dadurch gekennzeichnet, dass**
das Fahrunterstützungssystem (12) zum Bilden einer Rettungsgasse (14) integral mit wenigstens einer weiteren Unterstützungsfunktion ausgeführt ist.

20. Fahrunterstützungssystem (10) nach einem der Ansprüche 15 bis 19, **dadurch gekennzeichnet, dass**
das Fahrunterstützungssystem (10) ausgeführt ist, die Erfassung der von dem Fahrzeug (10) befahrenen Fahrspur (36) basierend auf den seitlichen Abständen zu den Hindernissen durchzuführen.

## Claims

1. Method for forming a rescue lane (14) for a vehicle (10), wherein the vehicle (10) has at least one environmental sensor (16, 18, 20) for detecting an environment (22) of the vehicle (10), comprising two ultrasonic sensors (16) which are attached to the vehicle (10) in such a way as to detect lateral distances to obstacles, such as surrounding vehicles (44), located to the right or left of the vehicle (10), wherein the method comprises the steps of:
detecting (S100) a driving situation on a road (32) having a carriageway (34) with a plurality of lanes (36) for a direction of travel (38) of the vehicle (10), determining (S110) a traffic jam situation on the road (32),
detecting (S120) a lane (36) used by the vehicle (10) from the plurality of lanes (36) for the direction of travel (38) of the vehicle (10),
detecting (S140) a position of the vehicle (10) with respect to surrounding vehicles (44) and/or one or more boundaries (40, 42) of lanes (36) and/or of the carriageway (34) based on sensor information provided by the at least one environmental sensor (16, 18, 20), determining (S150) a required change in the position of the vehicle (10) to form the rescue lane (14) based on the lane (36) used by the vehicle (10) and the position of the vehicle (10) with respect to surrounding vehicles (44) and/or one or more boundaries (40, 42) of lanes (36) and/or of the carriageway (34), wherein the required change in the position of the vehicle (10) to form the rescue lane (14) is determined based on the lateral distances to the obstacles,
and
outputting (S160) the required change in the position of the vehicle (10) to form the rescue lane (14), comprising outputting the required positioning via an internal vehicle interface of the vehicle (10) in order to move the vehicle (10) in an autonomous or partially autonomous manner according to the required change in the position of the vehicle (10) to form the rescue lane (14).

2. Method according to Claim 1, **characterized in that** the sensor information only includes information from a close range, in particular from ultrasonic sensors (16) attached to the vehicle (10).

3. Method according to one of the preceding claims, **characterized in that**
the detection of a driving situation on a road (32) having a carriageway (34) with a plurality of lanes (36) for a direction of travel (38) of the vehicle (10) comprises determining a vehicle position based on received satellite position signals from a global navigation satellite system and detecting the driving situation based on driving situation information belonging to the vehicle position.

4. Method according to one of the preceding claims, **characterized in that**
the detection of a driving situation on a road (32) having a carriageway (34) with a plurality of lanes (36) for a direction of travel (38) of the vehicle (10) comprises detecting the driving situation based on sensor information provided by the at least one environmental sensor (16, 18, 20).

5. Method according to one of the preceding claims, **characterized in that**
the determination of a traffic jam situation on the road (32) comprises receiving traffic information, in particular according to the TMC standard, for the road (32).

6. Method according to one of the preceding claims, **characterized in that**
the determination of a traffic jam situation on the road (32) comprises determining odometry data relating to the vehicle (10), in particular a driving speed of the vehicle (10).

7. Method according to one of the preceding claims, **characterized in that**
the determination of a traffic jam situation on the road (10) comprises determining the traffic jam situation based on sensor information provided by the at least one environmental sensor (16, 18, 20), in particular based on distances to surrounding vehicles (44) and/or based on distances to one or more boundaries (40, 42) of lanes (36) and/or of the carriageway (34).

8. Method according to one of the preceding claims, **characterized in that**
the method comprises a step for measuring the rescue lane (14).

9. Method according to Claim 8, **characterized in that** the measurement of the rescue lane (14) involves determining a lateral distance to a vehicle in a lane located behind the rescue lane (14).

10. Method according to Claim 8 or 9, **characterized in that**
the rescue lane (14) is measured based on sensor information from the at least one environmental sensor.

11. Method according to Claim 9 and/or 10, **characterized in that**
the lateral distance to the vehicle in the lane located behind the rescue lane (14) is determined using an ultrasonic sensor (16) attached to the vehicle (10) in such a way as to detect lateral distances to obstacles.

12. Method according to one of the preceding claims, **characterized in that**
the method comprises an additional step for identifying when an emergency vehicle approaches the vehicle (10).

13. Method according to Claim 12, **characterized in that** the approach of the emergency vehicle to the vehicle (10) is carried out using the at least one environmental sensor, or using an optical camera with a viewing direction to a rear of the vehicle, and/or using acoustic detection, by monitoring the environment for typical acoustic signals from emergency vehicles, in particular by means of a microphone.

14. Method according to one of the preceding claims, **characterized in that**
the at least one environmental sensor (16, 18, 20) is environmental sensors which are already present on the vehicle in order to implement other driving assistance functions, for parking the vehicle in an autonomous or semi-autonomous manner and/or for monitoring the blind spot.

15. Driving assistance system (12) for a vehicle (10) for forming a rescue lane (14), comprising
at least one environmental sensor (16, 18, 20) for detecting an environment (22) of the vehicle (10), and
a control device (24) which is connected, via a data bus (26), to the at least one environmental sensor (16, 18, 20) for detecting the environment (22) of the vehicle (10),
wherein the driving assistance system (12) is designed to carry out the method for forming a rescue lane (14) according to one of the preceding Claims 1 to 14, wherein the driving assistance system (12) is designed to drive the vehicle (10) in an autonomous or at least partially autonomous manner,
wherein the driving assistance system (10) has two ultrasonic sensors (16) attached to the vehicle (10) in such a way as to detect lateral distances to obstacles, such as surrounding vehicles (44), located to the right or left of the vehicle (10), and
the driving assistance system (10) is designed to determine the required change in the position of the vehicle (10) to form the rescue lane (14) based on the lateral distances to the obstacles.

16. Driving assistance system (12) according to Claim 15, **characterized in that**
the at least one environmental sensor (16, 18, 20) is designed as an ultrasonic sensor (16) and/or as an optical camera (18, 20).

17. Driving assistance system (12) according to either of Claims 15 and 16, **characterized in that**
the driving assistance system (12) comprises a receiver (28) for satellite position signals from a global navigation satellite system.

18. Driving assistance system (12) according to one of Claims 15 to 17, **characterized in that**
the driving assistance system (12) comprises a receiver (30) for traffic information, in particular in accordance with the TMC standard.

19. Driving assistance system (10) according to one of Claims 15 to 18, **characterized in that**
the driving assistance system (12) for forming a rescue lane (14) is designed integrally with at least one further assistance function.

20. Driving assistance system (10) according to one of Claims 15 to 19, **characterized in that**
the driving assistance system (10) is designed to detect the lane (36) used by the vehicle (10) based on the lateral distances to the obstacles.

## Revendications

1. Procédé pour former un couloir de secours (14) pour un véhicule (10), le véhicule (10) étant équipé d'au moins un capteur d'environnement (16, 18, 20) pour détecter un environnement (22) du véhicule (10), comprenant deux capteurs à ultrasons (16) qui sont montés sur le véhicule (10) de manière à détecter des distances latérales par rapport à des obstacles, tels que des véhicules environnants (44), qui se trouvent à droite ou à gauche du véhicule (10), le procédé comprenant les étapes suivantes :
détecter (S100) une situation de circulation sur une route (32) comportant une chaussée (34) à plusieurs voies (36) pour une direction de circulation (38) du véhicule (10), déterminer (S110) une situation d'embouteillage sur la route (32),
détecter (S120) une voie (36) empruntée par le véhicule (10) parmi les plusieurs voies (36) pour la direction de circulation (38) du véhicule (10),
détecter (S140) une position du véhicule (10) par rapport aux véhicules environnants (44) et/ou une ou plusieurs délimitations (40, 42) de voies de circulation (36) et/ou de la chaussée (34) sur la base d'informations de capteur fournies par ledit au moins un capteur d'environnement (16, 18, 20), déterminer (S150) un changement de position nécessaire du véhicule (10) pour former le couloir de secours (14) en fonction de la voie (36) empruntée par le véhicule (10) et de la position du véhicule (10) par rapport aux véhicules environnants (44) et/ou d'une ou plusieurs délimitations (40, 42) de voies de circulation (36) et/ou de la chaussée (34), le changement de position nécessaire du véhicule (10) pour former le couloir de secours (14) étant déterminé sur la base des distances latérales par rapport aux obstacles,
et
émettre (S160) le changement de position nécessaire du véhicule (10) pour former le couloir de secours (14), ce qui comprend une émission du positionnement nécessaire via une interface interne du véhicule (10) pour déplacer de manière autonome ou semi-autonome le véhicule (10) conformément au changement de position nécessaire du véhicule (10) afin de former le couloir de secours (14).

2. Procédé selon la revendication 1, **caractérisé en ce que**
les informations de capteur ne comprennent que des informations provenant d'une zone proche, en particulier de capteurs à ultrasons (16) montés sur le véhicule (10).

3. Procédé selon l'une des revendications précédentes, **caractérisé en ce que**
la détection d'une situation de circulation sur une route (32) comportant une chaussée (34) à plusieurs voies de circulation (36) pour une direction de circulation (38) du véhicule (10) comprend une détermination d'une position du véhicule sur la base de signaux reçus de position satellite d'un système mondial de navigation par satellite et une détection de la situation de circulation sur la base d'informations de situation de circulation associées à la position du véhicule.

4. Procédé selon l'une des revendications précédentes, **caractérisé en ce que**
la détection d'une situation de circulation sur une route (32) ayant une chaussée (34) à plusieurs voies (36) pour une direction de circulation (38) du véhicule (10) comprend une détection de la situation de circulation sur la base d'informations de capteur fournies par ledit au moins un capteur d'environnement (16, 18, 20).

5. Procédé selon l'une des revendications précédentes, **caractérisé en ce que**
la détermination d'une situation d'embouteillage sur la route (32) comprend une réception d'informations de circulation, en particulier selon la norme TMC, pour la route (32).

6. Procédé selon l'une des revendications précédentes, **caractérisé en ce que**
la détermination d'une situation d'embouteillage sur la route (32) comprend une détermination de données odométriques du véhicule (10), en particulier d'une vitesse de déplacement du véhicule (10).

7. Procédé selon l'une des revendications précédentes, **caractérisé en ce que**
la détermination d'une situation d'embouteillage sur la route (10) comprend une détermination de la situation d'embouteillage sur la base d'informations de capteur fournies par ledit au moins un capteur d'environnement (16, 18, 20), en particulier sur la base de distances par rapport aux véhicules environnants (44) et/ou sur la base des distances par rapport à une ou plusieurs délimitations (40, 42) de voies de circulation (36) et/ou de la chaussée (34).

8. Procédé selon l'une des revendications précédentes, **caractérisé en ce que**
le procédé comprend une étape de mesure du couloir de secours (14).

9. Procédé selon la revendication 8, **caractérisé en ce que**
la mesure du couloir de secours (14) concerne une détermination d'une distance latérale par rapport à un véhicule sur une voie de circulation située derrière le couloir de secours (14).

10. Procédé selon la revendication 8 ou la revendication 9, **caractérisé en ce que**
la mesure du couloir de secours (14) est effectuée sur la base d'informations de capteur dudit au moins un capteur d'environnement.

11. Procédé selon la revendication 9 et/ou la revendication 10, **caractérisé en ce que**
la distance latérale par rapport au véhicule sur la voie de circulation située derrière le couloir de secours (14) est déterminée au moyen d'un capteur à ultrasons (16) qui est monté sur le véhicule (10) de manière à détecter des distances latérales par rapport à des obstacles.

12. Procédé selon l'une des revendications précédentes, **caractérisé en ce que**
le procédé comprend une étape supplémentaire pour détecter une approche d'un véhicule d'intervention vers le véhicule (10).

13. Procédé selon la revendication 12, **caractérisé en ce que**
l'approche du véhicule d'intervention vers le véhicule (10) est détectée au moyen dudit au moins un capteur d'environnement, ou au moyen d'une caméra optique ayant une direction de visée vers un côté arrière du véhicule, et/ou d'un système de détection acoustique surveillant l'environnement à la recherche de signaux acoustiques types de véhicules d'intervention, en particulier au moyen d'un microphone.

14. Procédé selon l'une des revendications précédentes, **caractérisé en ce que**
ledit au moins un capteur d'environnement (16, 18, 20) consiste en des capteurs d'environnement qui sont déjà présents sur le véhicule pour réaliser d'autres fonctions d'assistance à la conduite, pour le stationnement autonome ou semi-autonome du véhicule et/ou pour la surveillance d'angles morts.

15. Système (12) d'assistance à la conduite pour un véhicule (10) destiné à former un couloir de secours (14), comprenant
au moins un capteur d'environnement (16, 18, 20) pour détecter un environnement (22) du véhicule (10), et
un dispositif de commande (24) qui est relié, par l'intermédiaire d'un bus de données (26), audit au moins un capteur d'environnement (16, 18, 20) pour détecter l'environnement (22) du véhicule (10),
le système (12) d'assistance à la conduite étant conçu pour mettre en œuvre le procédé de formation d'un couloir de secours (14) selon l'une des revendications précédentes 1 à 14, le système (12) d'assistance à la conduite étant conçu pour la conduite autonome ou au moins semi-autonome du véhicule (10),
le système (10) d'assistance à la conduite comprenant deux capteurs à ultrasons (16) qui sont montés sur le véhicule (10) de manière à détecter des distances latérales par rapport à des obstacles, tels que des véhicules environnants (44), qui se trouvent à droite ou à gauche près du véhicule (10), et
le système (10) d'assistance à la conduite est conçu de façon à déterminer le changement de position nécessaire du véhicule (10) afin de former le couloir de secours (14) sur la base des distances latérales par rapport aux obstacles.

16. Système (12) d'assistance à la conduite selon la revendication 15, **caractérisé en ce que**
ledit au moins un capteur d'environnement (16, 18, 20) est réalisé sous forme de capteur à ultrasons (16) et/ou de caméra optique (18, 20).

17. Système (12) d'assistance à la conduite selon l'une des revendications 15 et 16, **caractérisé en ce que**
le système (12) d'assistance à la conduite comprend un récepteur (28) pour des signaux de position satellite d'un système mondial de navigation par satellite.

18. Système (12) d'assistance à la conduite selon l'une des revendications 15 à 17, **caractérisé en ce que**
le système (12) d'assistance à la conduite comprend un récepteur (30) pour des informations de circulation, en particulier selon la norme TMC.

19. Système (10) d'assistance à la conduite selon l'une des revendications 15 à 18, **caractérisé en ce que**
le système (12) d'assistance à la conduite est intégré avec au moins une autre fonction d'assistance pour former un couloir de secours (14).

20. Système (10) d'assistance à la conduite selon l'une des revendications 15 à 19, **caractérisé en ce que**
le système (10) d'assistance à la conduite est conçu pour effectuer la détection de la voie (36) empruntée par le véhicule (10) en fonction des distances latérales par rapport aux obstacles.
